# EUROPEAN PATENT APPLICATION

(11) **EP 4 755 930 A1**
(43) Date of publication of application: **10.06.2026**
(21) Application number: 24849244.9
(22) Date of filing: 01.08.2024
(51) Int. Cl.: C08F 4/70, C08F 36/06

(54) **METHOD FOR PRODUCING 1,2-POLYBUTADIENE AND CATALYST COMPOSITION**

(30) Priority: 02.08.2023 JP 2023126555
(71) Applicant: ENEOS Materials Corporation, Tokyo 105-7109 (JP)
(72) Inventor: MATSUMOTO Shouichi, Tokyo 105-7109 (JP); HAYASHI Yuuta, Tokyo 105-7109 (JP); SHIBATA Masahiro, Tokyo 105-7109 (JP)
(74) Representative: dompatent
(86) International application number: PCT/JP2024/027488
(87) International publication number: WO 2025/028599

(57) **Abstract**

The object of the present invention is to provide a method for producing 1,2-polybutadiene making it possible to produce 1,2-polybutadiene that is highly soluble in polymerization solvents and less prone to precipitation, as well as a catalyst composition for use therein. The method for producing 1,2-polybutadiene is characterized by including a step for polymerizing 1,3-butadiene in the presence of a catalyst system containing (a) a transition metal carboxylate, (b) an aluminoxane compound, and (c) a phosphine compound represented by the following General Formula (1). In General Formula (1), R¹ and R² represent substituted or unsubstituted aryl groups having 6 to 30 carbon atoms and may be the same or different. R³ represents a substituted or unsubstituted branched alkyl group having 4 to 20 carbon atoms, or a substituted cycloalkyl group having 6 to 30 carbon atoms.

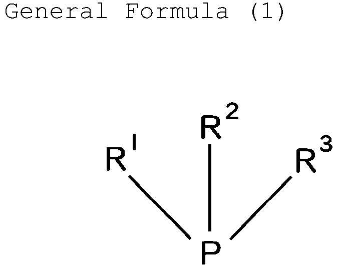

## Description

### Technical Field

The present invention relates to a method for producing 1,2-polybutadiene in which 1,3-butadiene is polymerized in the presence of a specific catalyst system to produce syndiotactic-1,2-polybutadiene, and to a catalyst composition used therein.

### Background Art

Syndiotactic-1,2-polybutadiene has a structure consisting of highly crystalline regions and amorphous portions, and therefore functions as a thermoplastic elastomer. Furthermore, due to the presence of carbon-carbon double bonds having high chemical reactivity within the molecule, it also functions as a conventional vulcanized rubber or a thermosetting resin with increased crosslink density. In addition, due to excellent processability thereof, 1,2-polybutadiene is also used as a modifier for other resins and thermoplastic elastomers (e.g., for tires to improve strength) and as a medical polymer material.

Conventional methods for producing 1,2-polybutadiene include polymerizing 1,3-butadiene in the presence of a cis-polymerization catalyst to produce cis-1,4-polybutadiene, and then polymerizing 1,3-butadiene in the presence of a 1,2-polymerization catalyst in this polymerization system to produce the final polybutadiene (see, for example, Patent Literature 1), or polymerizing butadiene or butadiene and a conjugated diene other than butadiene in the presence of a catalyst containing a cobalt compound and an aluminoxane (see, for example, Patent Literature 2).

However, in the above-mentioned methods for producing 1,2-polybutadiene, polymer precipitation can occur in a polymerization vessel in the course of polymerization continuously conducted in the polymerization vessel. When polymer precipitation occurs in the polymerization vessel, it becomes necessary to stop the polymerization and clean up the polymerization vessel, resulting in problems such as reduced productivity in terms of production time and yield.

### Citation List

### Patent Literature

Patent Literature 1: Japanese Examined Patent Publication No. S49-017667
Patent Literature 2: Japanese Patent Application Laid-open No. 2006-089759

### Summary of Invention

### Technical Problem

The present invention was created based on the above circumstances, and an object thereof is to provide a method for producing 1,2-polybutadiene making it possible to produce 1,2-polybutadiene that is highly soluble in polymerization solvents and less prone to precipitation, as well as a catalyst composition for use therein.

### Solution to Problem

As a result of extensive research conducted to achieve the above object, the inventors have found that by using a specific catalyst composition as a polymerization catalyst, it is possible to selectively synthesize 1,2-polybutadiene that is highly soluble in polymerization solvents and less prone to precipitation, thereby completing the present invention.

The method for producing 1,2-polybutadiene of the present invention is characterized by including a step for polymerizing 1,3-butadiene in the presence of a catalyst system containing (a) a transition metal carboxylate, (b) an aluminoxane compound, and (c) a phosphine compound represented by the following General Formula (1):

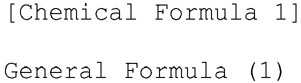

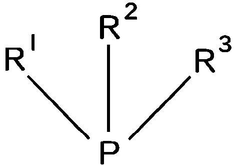

[In the above General Formula (1), R¹ and R² represent substituted or unsubstituted aryl groups having 6 to 30 carbon atoms and may be the same or different. R³ represents a substituted or unsubstituted branched alkyl group having 4 to 20 carbon atoms, or a substituted cycloalkyl group having 6 to 30 carbon atoms.]

In the method for producing 1,2-polybutadiene of the present invention, it is preferable that the transition metal constituting the (a) transition metal carboxylate be cobalt.

In the method for producing 1,2-polybutadiene of the present invention, the 1,2-polybutadiene preferably has a 1,2-vinyl bond content of 30% by mass or more.

The catalyst composition of the present invention is characterized by containing (a) a transition metal carboxylate, (b) an aluminoxane compound, and (c) a phosphine compound represented by the following General Formula (1):

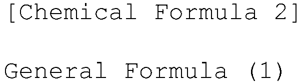

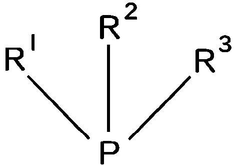

[In the above General Formula (1), R¹ and R² represent substituted or unsubstituted aryl groups having 6 to 30 carbon atoms and may be the same or different. R³ represents a substituted or unsubstituted branched alkyl group having 4 to 20 carbon atoms, or a substituted cycloalkyl group having 6 to 30 carbon atoms.]

In the catalyst composition of the present invention, the transition metal constituting the (a) transition metal carboxylate is preferably cobalt.

### Advantageous Effects of Invention

The method for producing 1,2-polybutadiene of the present invention provides 1,2-polybutadiene with high solubility in the polymerization solvent at the desired polymerization temperature, making it less likely to precipitate in the polymerization vessel during polymerization. As a result, there is no need to stop the polymerization during the polymerization step to clean up the polymerization vessel, resulting in high productivity. The catalyst composition of the present invention makes it possible to produce 1,2-polybutadiene with high solubility in the polymerization solvent, ensuring high productivity.

### Description of Embodiments

Embodiments of the present invention are described below.

The method for producing 1,2-polybutadiene of the present invention includes a step for polymerizing 1,3-butadiene in the presence of a catalyst system including a catalyst composition (hereinafter also referred to as the "specific catalyst composition") containing (a) a transition metal carboxylate, (b) an aluminoxane compound, and (c) a phosphine compound represented by the above General Formula (1) (hereinafter also referred to as the "specific phosphine compound").

Examples of the transition metal constituting the (a) transition metal carboxylate of the specific catalyst composition include manganese, iron, cobalt, nickel, etc., with cobalt being preferred.

Specific examples of the (a) transition metal carboxylate include manganese(II) oxalate, manganese(II) formate, manganese(II) acetate, manganese(III) acetate, manganese(II) benzoate, manganese(II) 4-cyclohexylbutyrate, manganese(II) 2-ethylhexanoate, etc., and hydrates thereof; iron(II) oxalate, iron(II) acetate, iron(II) fumarate, iron(II) lactate, iron(II) gluconate, sodium iron(II) citrate, iron(III) citrate, iron(II) benzoate, iron(II) stearate, etc., and hydrates thereof; cobalt(II) oxalate, cobalt(II) acetate, cobalt(II) fumarate, cobalt(II) lactate, cobalt(II) gluconate, cobalt(III) citrate, cobalt(II) benzoate, cobalt(II) stearate, cobalt(II) octoate, etc., and hydrates thereof; nickel(II) formate, nickel(II) oxalate, nickel(II) acetate, nickel(II) fumarate, nickel(II) lactate, nickel(II) gluconate, nickel(II) benzoate, nickel(II) stearate, etc., and hydrates thereof.

Examples of the (b) aluminoxane compound of the specific catalyst composition include compounds represented by the following General Formula (2) or (3):

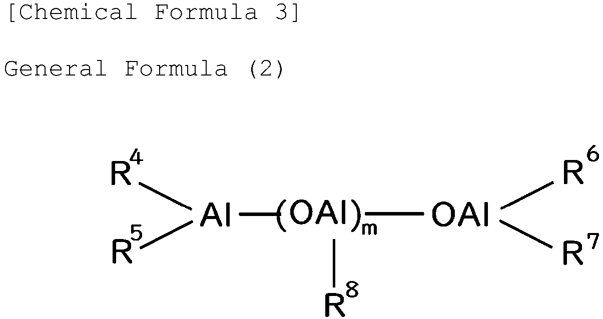

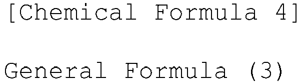

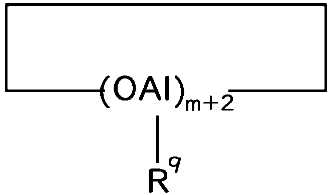

In the aluminoxane compound represented by the above General Formula (2) or (3), R⁴ to R⁹ each independently represent a hydrocarbon group such as a methyl group, an ethyl group, a propyl group, or a butyl group, preferably a methyl group or an ethyl group, and particularly preferably a methyl group. Furthermore, m represents an integer of 2 or greater, preferably 5 or greater, and more preferably 10 to 100.

Specific examples of the (b) aluminoxane compound include methylaluminoxane, ethylaluminoxane, propylaluminoxane, and butylaluminoxane, with methylaluminoxane being particularly preferred.

In the above General Formula (1) representing the specific (c) phosphine compound of the specific catalyst composition, R¹ and R² represent substituted or unsubstituted aryl groups having 6 to 30 carbon atoms and may be the same or different.

R¹ and R² are preferably substituted or unsubstituted aryl groups having 6 to 15 carbon atoms.

When the aryl group is substituted, examples of substituents include alkyl groups having 1 to 12 carbon atoms and alkoxyl groups having 1 to 12 carbon atoms. When the number of substituents is two or more, the substituents may be the same or different.

Specific examples of substituted or unsubstituted aryl groups having 6 to 30 carbon atoms include phenyl group, 2-methylphenyl group, 4-methylphenyl group, 2-tert-butylphenyl group, 2,4,6-trimethylphenyl group, 2-isopropylphenyl group, methoxyphenyl group, 1,1-diphenylethyl group, phenoxyphenyl group, naphthyl group, phenylnaphthyl group, phenanthrene group, and anthracene group.

Specifically, it is preferable that R¹ and R² be both phenyl groups.

In the above General Formula (1), R³ represents a substituted or unsubstituted branched alkyl group having 4 to 20 carbon atoms, or a substituted cycloalkyl group having 6 to 30 carbon atoms.

R³ is preferably a substituted or unsubstituted branched alkyl group having 4 to 15 carbon atoms, or a substituted cycloalkyl group having 6 to 15 carbon atoms.

Specific examples of substituted or unsubstituted branched alkyl groups having 4 to 20 carbon atoms include tert-butyl group, tert-pentyl group, isopentyl group, 3-ethylpent-3-yl group, and 3-methylpent-3-yl group.

Examples of substituents for the cycloalkyl group include alkyl groups having 1 to 12 carbon atoms, alkoxyl groups having 1 to 12 carbon atoms, and alkylsilyl groups having 1 to 12 carbon atoms. When there are two or more substituents, they may be the same or different.

Specific examples of the substituted cycloalkyl group having 6 to 30 carbon atoms include hexamethylcyclohexyl group, 2-isopropyl-5-methylcyclohexyl group (neomenthyl group), pentamethylcyclopentyl group, 2-cyclooctylethyl group, methylcyclohexyl group, methoxycyclohexyl group, and phenylcyclohexyl group.

Specific examples of R³ are tert-butyl group or 2-isopropyl-5-methylcyclohexyl group (neomenthyl group).

In the specific catalyst composition, the phosphorus atom (P) of the specific phosphine compound (c) does not form a complex.

The amount of the specific catalyst composition used, expressed as a molar ratio (BD/Al) of aluminum atoms (Al) of the (b) aluminoxane compound to 1,3-butadiene, is preferably 400 to 4,000, and more preferably 800 to 2,000. A ratio (BD/Al) of less than 400 is economically disadvantageous, while a ratio exceeding 4,000 may result in reduced polymerization activity.

Furthermore, the amount of (b) aluminoxane compound used, expressed as a molar ratio (Al/M) of aluminum atoms (Al) to the transition metal atoms (M) of the (a) transition metal carboxylate is preferably 4 to 200, and more preferably 10 to 150.

Furthermore, the amount of (c) specific phosphine compound used, expressed as a molar ratio (P/M) of phosphorus atoms (P) to the transition metal atoms (M) of the (a) transition metal carboxylate, is preferably 0.1 to 50, more preferably 0.5 to 20, and particularly preferably 1 to 20.

The method for producing 1,2-polybutadiene of the present invention is carried out in the presence of a polymerization solvent, and an inert organic solvent is used as the polymerization solvent. Examples of inert organic solvents include aromatic hydrocarbons such as benzene, toluene, xylene, and cumene; aliphatic hydrocarbons such as n-pentane, n-hexane, and n-butane; alicyclic hydrocarbons such as cyclopentane, methylcyclopentane, and cyclohexane; and mixtures thereof.

The polymerization temperature is typically -50°C to 120°C, preferably -20°C to 100°C. Continuous polymerization in which multiple units are connected in series is preferred. The monomer concentration in the solvent is typically 5% by mass to 50% by mass, preferably 10% by mass to 35% by mass. To produce 1,2-polybutadiene, care must be taken to minimize the inclusion of deactivating compounds such as oxygen, water, and carbon dioxide in the polymerization system, so as not to deactivate the catalyst and polymer.

In addition, in the method for producing 1,2-polybutadiene of the present invention, conjugated dienes other than 1,3-butadiene can also be used in combination in an amount of 10% or less. Examples of conjugated dienes include 4-alkyl-substituted-1,3-butadienes, 2-alkyl-substituted-1,3-butadienes, etc. Among these, examples of the 4-alkylsubstituted-1,3-butadienes include 1,3-pentadiene, 1,3-hexadiene, 1,3-heptadiene, 1,3-octadiene, 1,3-nonadiene, and 1,3-decadiene. Representative examples of the 2-alkyl substituted-1,3-butadienes include 2-methyl-1,3-butadiene (isoprene), 2-ethyl-1,3-butadiene, 2-propyl-1,3-butadiene, 2-isopropyl-1,3-butadiene, 2-butyl-1,3-butadiene, 2-isobutyl-1,3-butadiene, 2-amyl-1,3-butadiene, 2-isoamyl-1,3-butadiene, 2-hexyl-1,3-butadiene, 2-cyclohexyl-1,3-butadiene, 2-isohexyl-1,3-butadiene, 2-heptyl-1,3-butadiene, 2-isoheptyl-1,3-butadiene, 2-octyl-1,3-butadiene, and 2-isooctyl-1,3-butadiene. Among these conjugated dienes, examples of preferred conjugated dienes that can be used in combination with 1,3-butadiene include isoprene and 1,3-pentadiene.

Once the polymerization reaction has progressed to the desired stage, a polymerization terminator such as alcohol, an anti-aging agent, an antioxidant, an ultraviolet absorber, etc., can be added to the reaction mixture. Then, the resulting polymer can be separated, washed, and dried according to conventional methods to obtain the desired 1,2-polybutadiene.

### [Product]

The 1,2-polybutadiene obtained by the above production method has a 1,2-vinyl bond content of 30% by mass or more, preferably 35% by mass or more, and more preferably 40% by mass or more. The 1,2-vinyl bond content can be measured in accordance with the method described in the Examples section below.

Furthermore, a precipitation indicator temperature difference for 1,2-polybutadiene, which is calculated as (polymerization temperature - precipitation indicator temperature), is preferably 5°C to 50°C, more preferably 10°C to 50°C, and particularly preferably 30°C to 40°C.

The precipitation indicator temperature was determined by measuring the solution viscosity at 5°C intervals using a polymer solution prepared by diluting the polymer (1,2-polybutadiene) obtained by the above-described production method with cyclohexane to a solids concentration equivalent to that during polymerization. The solution viscosity was then logarithmically plotted from high to low temperatures, and when a point where the linearity was lost appeared on the plot, the temperature on the high-temperature side just before this point was determined as the precipitation indicator temperature.

When the precipitation indicator temperature difference is within the above range, 1,2-polybutadiene has high solubility in the polymerization solvent at the intended polymerization temperature, making 1,2-polybutadiene less likely to precipitate in the polymerization vessel during polymerization. As a result, there is no need to stop the polymerization during the polymerization step to clean up the polymerization vessel, resulting in high productivity for the above-described production method.

Where the precipitation indicator temperature difference is 0°C or less, i.e., where the precipitation indicator temperature is equal to or higher than the polymerization temperature, clear precipitation will occur in the polymerization vessel during polymerization, requiring cleanup of the polymerization vessel.

Furthermore, the melting point of 1,2-polybutadiene is preferably above 126°C, more preferably 130°C or more, and particularly preferably 135°C or more. The melting point is measured in accordance with the method described in the Examples below.

The molecular weight of 1,2-polybutadiene, expressed as a weight-average molecular weight in terms of polystyrene, is typically preferably between 100,000 and 600,000. A molecular weight below 100,000 results in poor strength properties, while a molecular weight above 600,000 results in poor processability. The molecular weight can be adjusted by adjusting the ratio of aluminum atoms (Al) in the (b) aluminoxane compound to transition metal atoms (M) in the (a) transition metal carboxylate.

Furthermore, the 1,2-polybutadiene obtained by the above production method exhibits sufficient strength even in a state in which no crosslinking was performed, making it suitable for non-crosslinking molding applications such as industrial parts obtained by injection molding, extrusion molding, etc. and film applications.

Furthermore, due to excellent crosslinking reactivity thereof, the 1,2-polybutadiene obtained by the above production method is also suitable for use in crosslinked rubber applications and as a reaction aid for vulcanized rubber. There are no particular limitations on the processing method, and mixing is possible using melt kneading or other methods using rolls, kneaders, Banbury mixers, screw extruders, feeder-ruder extruders, and other machines commonly used in resin and rubber processing.

Furthermore, the 1,2-polybutadiene obtained in this manner is suitable for use as a modifier for other thermoplastic elastomers and resins.

### Examples

Specific examples of the present invention are described below, but the present invention is not limited to these examples. In the examples, "parts" and "%" are by weight unless otherwise specified.

Furthermore, various measurements in the examples were performed using the following methods.

The solids concentration was measured when polymerization was performed under conditions that resulted in a polymerization conversion rate of 90% or higher, and the solids concentration ratio was expressed as an index with the result of Example 1 taken as 100. To measure the solids concentration, a sample was placed on an aluminum dish for which the mass had been measured in advance, and the aluminum dish was heated on a hot plate at 170°C for 5 min. The solids concentration in the sample was calculated from the mass before and after heating.

The vinyl bond content (1,2-bond content) and cis bond content (cis-1,4-bond content) of 1,2-polybutadiene were determined using infrared absorption spectroscopy (Morello method).

The weight-average molecular weight (Mw) was measured, as a value converted into polystyrene, by gel permeation chromatography (GPC) at 135°C using o-dichlorobenzene as the solvent.

The melting point was determined according to the ASTM method by using a DSC measurement device. The melting point was determined as the temperature at which the endothermic peak reached its minimum value.

The precipitation indicator temperature was measured as described above. In addition, when the precipitation indicator temperature was lower than the polymerization temperature, the precipitation indicator was rated "A," and if it was higher, it was rated "B."

### [Example 1]

### <Polymerization of 1,3-Butadiene>

In a dry nitrogen atmosphere, 30 g of 1,3-butadiene (BD) and 114 g of cyclohexane (S/M = 3.8) were placed in a 300 ml pressure bottle. A 0.5% toluene solution of cobalt octoate (as Co atoms), a 1.0% toluene solution of (S)-(+)-neomenthyldiphenylphosphine, and a 1.0% toluene solution of methylaluminoxane (as Al atoms) were added to achieve BD/Al (molar ratio) = 500, Al/Co (atomic ratio) = 25, and P/Co = 1.0, respectively. Polymerization was carried out for 120 min in a thermostatic water bath at 80°C.

The reaction was terminated by adding a small amount of ethanol as a terminator.

Next, 0.3 parts of 2,6-di-t-butyl-p-cresol was added per 100 parts of polymer, and heating was performed on a hot plate to remove the solvent, yielding a polymer. The polymerization conversion rate was calculated from the yield. The results are shown in Table 1.

### [Comparative Example 1]

In a dry nitrogen atmosphere, 30 g of 1,3-butadiene (BD) and 114 g of cyclohexane (S/M = 3.8) were placed in a 300 ml pressure bottle. A 0.5% toluene solution of cobalt octoate (as Co atoms), a 1.0% toluene solution of cyclohexyldiphenylphosphine, and a 1.0% toluene solution of methylaluminoxane (as Al atoms) were added to achieve BD/Al (molar ratio) = 500, Al/Co (atomic ratio) = 30, and P/Co = 1.0, respectively. Polymerization was carried out for 120 min in a thermostatic water bath at 40°C, resulting in a decrease in flowability due to precipitation of the polymer solution.

The reaction was terminated by adding a small amount of ethanol as a terminator.

Next, 0.3 parts of 2,6-di-t-butyl-p-cresol per 100 parts of polymer was added, and heating was performed on a hot plate to remove the solvent, yielding a polymer. The polymerization conversion rate was calculated from the yield. The results are shown in Table 1.

### [Comparative Example 2]

In a dry nitrogen atmosphere, 24 g of 1,3-butadiene (BD) and 132 g of cyclohexane (S/M = 5.5) were placed in a 300 ml pressure bottle. A 0.5% toluene solution of cobalt octoate (as Co atoms), a 1.0% toluene solution of cyclohexyldiphenylphosphine, and a 1.0% toluene solution of methylaluminoxane (as Al atoms) were added to achieve BD/Al (molar ratio) = 500, Al/Co (atomic ratio) = 30, and P/Co = 1.0, respectively. Polymerization was carried out for 120 min in a thermostatic water bath at 40°C.

The reaction was terminated by adding a small amount of ethanol as a terminator.

Next, 0.3 parts of 2,6-di-t-butyl-p-cresol per 100 parts of polymer was added, and heating was performed on a hot plate to remove the solvent, yielding a polymer. The polymerization conversion rate was calculated from the yield. The results are shown in Table 1.

### [Comparative Example 3]

In a dry nitrogen atmosphere, 30 g of 1,3-butadiene (BD) and 114 g of cyclohexane (S/M = 3.8) were placed in a 300 ml pressure bottle. A 0.5% toluene solution of cobalt octoate (as Co atoms), a 1.0% toluene solution of cyclohexyldiphenylphosphine, and a 1.0% toluene solution of methylaluminoxane (as Al atoms) were added to achieve BD/Al (molar ratio) = 500, Al/Co (atomic ratio) = 50, and P/Co = 1.0, respectively. Polymerization was carried out for 120 min in a thermostatic water bath at 70°C.

The reaction was terminated by adding a small amount of ethanol as a terminator.

Next, 0.3 parts of 2,6-di-t-butyl-p-cresol was added per 100 parts of polymer, and heating was performed on a hot plate to remove the solvent, yielding a polymer. The polymerization conversion rate was calculated from the yield. The results are shown in Table 1.

### [Example 2]

### <Polymerization of 1,3-Butadiene>

In a dry nitrogen atmosphere, 30 g of 1,3-butadiene (BD) and 114 g of cyclohexane (S/M = 3.8) were placed in a 300 ml pressure bottle. A 0.5% toluene solution of cobalt octoate (as Co atoms), a 0.5% toluene solution of (S)-(+)-neomenthyldiphenylphosphine, and a 1.0% toluene solution of methylaluminoxane (as Al atoms) were added to achieve BD/Al (molar ratio) = 500, Al/Co (atomic ratio) = 20, and P/Co = 1.0, respectively. Polymerization was carried out for 120 min in a thermostatic water bath at 70°C.

The reaction was terminated by adding a small amount of ethanol as a terminator.

Next, 0.3 parts of 2,6-di-t-butyl-p-cresol was added per 100 parts of polymer, and heating was performed on a hot plate to remove the solvent, yielding a polymer. The polymerization conversion rate was calculated from the yield. The results are shown in Table 1.

### [Example 3]

### <Polymerization of 1,3-Butadiene>

In a dry nitrogen atmosphere, 30 g of 1,3-butadiene (BD) and 114 g of cyclohexane (S/M = 3.8) were placed in a 300 ml pressure bottle. A 0.5% toluene solution of cobalt octoate (as Co atoms), a 0.5% toluene solution of (S)-(+)-neomenthyldiphenylphosphine, and a 1.0% toluene solution of methylaluminoxane (as Al atoms) were added to achieve BD/Al (molar ratio) = 500, Al/Co (atomic ratio) = 140, and P/Co = 0.3, respectively. The polymerization was carried out for 120 min in a thermostatic water bath at 50°C.

The reaction was terminated by adding a small amount of ethanol as a terminator.

Next, 0.3 parts of 2,6-di-t-butyl-p-cresol was added per 100 parts of polymer, and heating was performed on a hot plate to remove the solvent, yielding a polymer. The polymerization conversion rate was calculated from the yield. The results are shown in Table 1.

**[Table 1]**

| | | | Example 1 | Comparative Example 1 | Comparative Example 2 | Comparative Example 3 | Example 2 | Example 3 |
|---|---|---|---|---|---|---|---|---|
| Catalyst type | Cobalt compound Phosphine compound | | Cobalt octoate | | | | | |
| | | | NMDPP | CHDPP | | | NMDPP | |
| | P/Co | Molar ratio | 1.0 | 1.0 | 1.0 | 1.0 | 1.0 | 0.3 |
| | BD/Al | Molar ratio | 500 | 500 | 500 | 500 | 500 | 500 |
| | Al/Co | Molar ratio | 25 | 30 | 30 | 50 | 20 | 140 |
| Polymerization conditions | S/M | Weight ratio | 3.8 | 3.8 | 5.5 | 3.8 | 3.8 | 3.8 |
| | Polymerization temperature | °C | 80 | 40 | 40 | 70 | 70 | 50 |
| Polymerization results | Polymerization conversion rate | % | 90 | 89 | 91 | 90 | 90 | 88 |
| | Solids concentration | % | 18.8 | 18.5 | 14.0 | 18.8 | 18.8 | 18.8 |
| Polymer properties | Mw | kg/mol | 140 | 138 | 141 | 138 | 140 | 139 |
| | Melting point | °C | 129 | 130 | 131 | 114 | 135 | 159 |
| | Vinyl bond content | % | 95 | 95 | 95 | 95 | 95 | 48 |
| | Cis bond content | % | 5 | 5 | 5 | 5 | 5 | 52 |
| Productivity | Solid component concentration ratio | INDEX | 100 | 99 | 75 | - | - | - |
| | Precipitation indicator temperature | °C | 45 | 45 | 35 | 25 | 50 | 45 |
| | Precipitation indicator temperature difference | °C | 35 | -5 | 5 | 45 | 20 | 5 |
| | Precipitation indicator | | A | B | A | A | A | A |

| | | | | | | | | |
|---|---|---|---|---|---|---|---|---|
| NMDPP : (S)-(+)-neomenthyldiphenylphosphine CHDPP : cyclohexyldiphenylphosphine | | | | | | | | |

As is clear from Table 1, in Examples 1 to 3, it was confirmed that 1,2-polybutadiene with the desired melting point could be produced with a desired yield (solids concentration ratio) without precipitation of the polymer solution.

Meanwhile, in Comparative Example 1, in which cyclohexyldiphenylphosphine was used as the phosphine compound, the polymerization temperature had to be lowered to 40°C to produce 1,2-polybutadiene with a melting point and production volume equivalent to those of Example 1. However, lowering the polymerization temperature resulted in a decrease in flowability due to precipitation of the polymer solution. Furthermore, in Comparative Example 2, in which cyclohexyldiphenylphosphine was used as the phosphine compound, producing the same polymer using conventional technology without precipitation of the polymer solution required an S/M ratio of 5.5, resulting in a decrease in the solids concentration ratio, which is an indicator of polymer productivity. Furthermore, in Comparative Example 3, in which cyclohexyldiphenylphosphine was used as the phosphine compound and the polymerization temperature was set at 70°C to prevent precipitation of the polymer solution, the melting point of the resulting polymer decreased with increasing polymerization temperature, making it impossible to obtain the desired polymer.

## Claims

1. A method for producing 1,2-polybutadiene, comprising a step for polymerizing 1,3-butadiene in the presence of a catalyst system containing (a) a transition metal carboxylate, (b) an aluminoxane compound, and (c) a phosphine compound represented by the following General Formula (1): 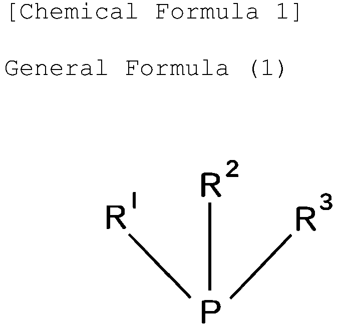 [In the above General Formula (1), R¹ and R² represent substituted or unsubstituted aryl groups having 6 to 30 carbon atoms and may be the same or different. R³ represents a substituted or unsubstituted branched alkyl group having 4 to 20 carbon atoms, or a substituted cycloalkyl group having 6 to 30 carbon atoms.]

2. The method for producing 1,2-polybutadiene according to claim 1, wherein the transition metal constituting the (a) transition metal carboxylate is cobalt.

3. The method for producing 1,2-polybutadiene according to claim 1, wherein the 1,2-polybutadiene has a 1,2-vinyl bond content of 30% by mass or more.

4. A catalyst composition comprising (a) a transition metal carboxylate, (b) an aluminoxane compound, and (c) a phosphine compound represented by the following General Formula (1): 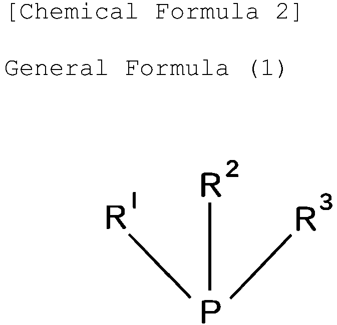 [In the above General Formula (1), R¹ and R² represent substituted or unsubstituted aryl groups having 6 to 30 carbon atoms and may be the same or different. R³ represents a substituted or unsubstituted branched alkyl group having 4 to 20 carbon atoms, or a substituted cycloalkyl group having 6 to 30 carbon atoms.]

5. The catalyst composition according to claim 4, wherein the transition metal constituting the (a) transition metal carboxylate is cobalt.
